# EUROPÄISCHE PATENTANMELDUNG

(11) **EP 2 540 674 A1**
(43) Veröffentlichungstag der Anmeldung: **02.01.2013**
(21) Anmeldenummer: 12401131.3
(22) Anmeldetag: 29.06.2012
(51) Int. Cl.: C02F 1/44, B01D 63/02, C02F 103/02, C02F 1/00

(54) **Verfahren und Vorrichtung zum Schutz der Permeatseite von Membranfiltern gegen eine Reverkeimung**

(30) Priorität: 29.06.2011 DE 202011102546 U; 21.09.2011 DE 202011105958 U; 19.04.2012 DE 102012103462
(71) Anmelder: Baumann, Jörn, 25421 Pinneberg (DE)
(72) Erfinder: Baumann, Jörn, 25421 Pinneberg (DE)
(74) Vertreter: Heun, Thomas

(57) **Zusammenfassung**

Es wird ein Verfahren und eine Vorrichtung zum Schutz der Permeatseite von Membranfiltern (1) gegen eine Reverkeimung insbesondere in Trinkwasser-, Prozesswasser- und Kühlwasser-Systemen oder in Systemen mit anderen flüssigen Medien beschrieben, die einer unerwünschten Reverkeimung mit Bakterien oder Viren ausgesetzt sein können. Zu diesem Zweck dient eine Abströmleitung (3), die über eine Stromverzweigung (50) in eine Permeatleitung (2) geschaltet ist, und mit der ein bestimmter Mindest-Volumenstrom durch den Membranfilter (1) aufrechterhalten wird, auch wenn in der Permeatleitung (2) wenig oder kein Permeatwasser fließt.

## Beschreibung

Die Erfindung betrifft ein Verfahren und eine Vorrichtung zum Schutz der Permeatseite von Membranfiltern gegen eine Reverkeimung insbesondere in Trinkwasser-, Prozesswasser- und Kühlwasser-Systemen oder in Systemen mit anderen flüssigen Medien (im Folgenden gemeinsam als "Wässer" bezeichnet), die einer unerwünschten Reverkeimung mit Bakterien oder Viren ausgesetzt sein können. Die Erfindung betrifft ferner eine Filtrations- oder Ultrafiltrationsanlage mit einem Membranfilter und einer solchen Schutzvorrichtung.

Die genannten Wässer werden bei zahlreichen haustechnischen und industriellen Systemen bzw. Anwendungen wie zum Beispiel für technologische Prozesse sowie biochemische und physikalische Reaktionen sowohl verbraucht, als auch in Kreisläufen geführt und vorzugsweise wieder verwendet.

Je nach Art der Anwendung und dem technischen Aufbau bestehen solche Systeme aus unterschiedlichen Werkstoffen und Materialien und sind gegenüber äußeren Einflüssen offen oder geschlossen. Dabei werden durch unterschiedliche Faktoren wie z.B. chemische oder biochemische Reaktionen und physikalische Parameter die geforderten Qualitäten der Wässer und damit der betreffenden Wasserführungen negativ beeinflusst. Ein besonderes Problem stellen dabei insbesondere Verunreinigungen durch Bakterien und Viren dar. Zur Verminderung oder Beseitigung dieser Verunreinigungen ist es bekannt, Membranfilter einzusetzen, durch die die betreffenden Wässer geführt werden.

Es hat sich jedoch gezeigt, dass bei solchen Membranfiltern häufig das Problem besteht, dass sich unter bestimmten Bedingungen auf deren Permeatseite bevorzugt Bakterien und Viren ansiedeln und relativ stark vermehren und von dort aus die bereits gereinigten und in einem Permeat-Leitungssystem zu einer Verbrauchsstelle bzw. in einem Kreislauf geführten Wässer ("Permeatwasser") wieder verschmutzen können. Dieses Problem kann zwar dadurch teilweise gelöst werden, dass das gereinigte Permeatwasser einer UV-Bestrahlung ausgesetzt wird, um die Entstehung und Ausbreitung der Bakterien und Viren zumindest zu begrenzen. Eine solche UV-Bestrahlung ist jedoch im Allgemeinen mit relativ hohen Kosten für die Erstellung und den Betrieb verbunden und damit ineffizient, so dass sie insgesamt als nachteilig angesehen wird.

Eine Aufgabe, die der Erfindung zugrunde liegt, besteht deshalb darin, ein Verfahren und eine Vorrichtung zu schaffen, mit dem/der die oben genannten oder andere Wässer, die mit einem Membranfilter gereinigt wurden ("Permeatwasser"), vor einer erneuten Verunreinigung insbesondere durch Bakterien und Viren ("Reverkeimung"), die sich an der Permeatseite des Membranfilters ansammeln können, in effizienterer Weise zumindest weitgehend geschützt werden können.

Gelöst wird diese Aufgabe mit einem Verfahren gemäß Anspruch 1, einer Vorrichtung gemäß Anspruch 4 sowie einer Filtrations- oder Ultrafiltrationsanlage mit einer solchen Vorrichtung gemäß Anspruch 13.

Ein besonderer Vorteil dieser Lösung besteht darin, dass eine UV-Bestrahlung bzw. UV-Nachbehandlung des Permeatwassers nicht mehr erforderlich ist, wodurch sich erhebliche konstruktive Vereinfachungen und Kostenersparnisse insbesondere im laufenden Betrieb ergeben.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: schematisch den grundsätzlichen Aufbau einer Filtrationsanlage gemäß der Erfindung in verschiedenen Ausführungsformen;
- Fig. 2: eine Filtrationsanlage gemäß der Erfindung in einer dreidimensionalen Ansicht;
- Fig. 3: eine Seitenansicht der in Figur 2 gezeigten Anlage;
- Fig. 4: ein Gehäuse einer erfindungsgemäßen Stromverzweigung;
- Fig. 5: einen Längsschnitt durch eine Stromverzweigungseinheit gemäß einer ersten Ausführungsform der Erfindung;
- Fig. 6: einen Längsschnitt durch eine Stromverzweigungseinheit gemäß einer zweiten Ausführungsform der Erfindung;
- Fig. 7: einen Längsschnitt durch eine Stromverzweigungseinheit gemäß einer dritten Ausführungsform der Erfindung;
- Fig. 8: eine vierte Ausführungsform einer erfindungsgemäßen Stromverzweigungseinheit in einer dreidimensionalen Ansicht sowie in einem Längsschnitt;
- Fig. 9: eine fünfte Ausführungsform einer erfindungsgemäßen Stromverzweigungseinheit in einer dreidimensionalen Ansicht sowie in einem Längsschnitt; und
- Fig. 10: einen Volumenstrom-Sensor für eine Permeatleitung.

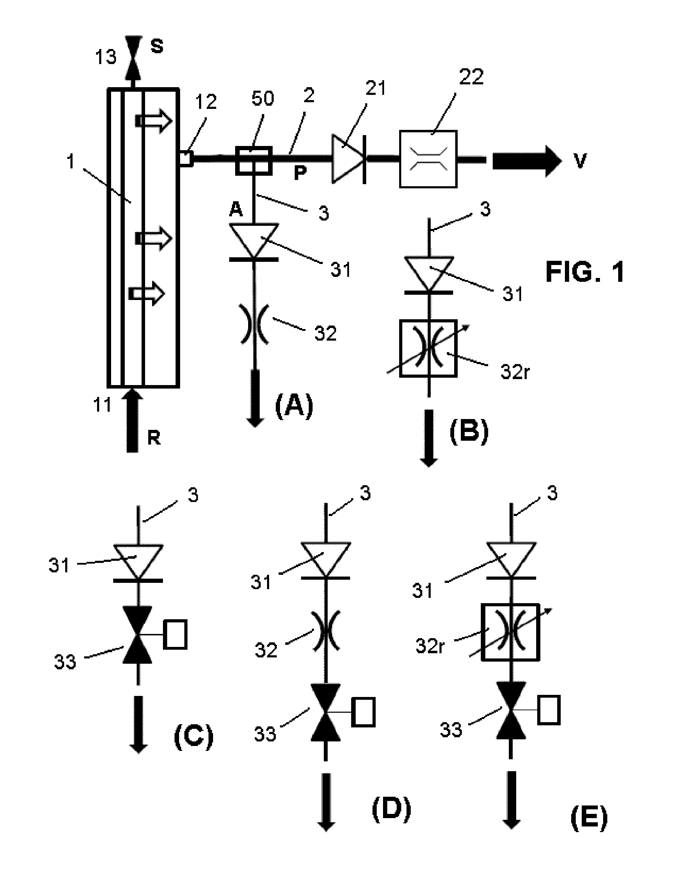

Figur 1 zeigt schematisch den grundsätzlichen hydraulischen Aufbau einer Filtrationsanlage gemäß der Erfindung beispielhaft in verschiedenen Ausführungsformen. Eine solche Anlage umfasst einen Membranfilter 1 mit einer Membran, einem Zulauf 11 für zu reinigendes Wasser (Rohwasser R), einem ersten Ablauf 12 für das gereinigte Wasser (Permeatwasser P) sowie einem zweiten Ablauf 13 für Spülwasser (S), der über ein Ventil im Bedarfsfall zur Reinigung des Membranfilters 1 geöffnet werden kann.

Weiterhin zeigt Figur 1 eine Stromverzweigung 50 (T-Leitungsstück) mit einem Eingang sowie einem ersten und einem zweiten Ausgang. Der Eingang ist mit dem ersten Ablauf 12 des Membranfilters 1 verbunden, während an den ersten Ausgang eine Permeatleitung 2 angeschlossen ist, die vorzugsweise über einen ersten Rückflussverhinderer (zum Beispiel Rückschlagventil) 21 und weiterhin seriell dazu vorzugsweise über einen Volumenstrom- oder Durchflussmengenmesser oder -Sensor 22 zu einer Verbrauchsstelle V oder in einen Kreislauf führt, um dieser/diesem das Permeatwasser P zur Nutzung zuzuführen. Mit dem zweiten Ausgang der Stromverzweigung 50 ist eine Abströmleitung 3 verbunden, in die vorzugsweise ein zweiter Rückflussverhinderer 31 sowie seriell dazu vorzugsweise ein erster Durchflussbegrenzer 32 geschaltet ist.

Im Betriebszustand der Filtrationsanlage, in dem das Ventil an dem zweiten Ablauf 13 für Spülwasser geschlossen ist, wird dem Membranfilter 1 über den Zulauf 11 Rohwasser zugeführt. Das Rohwasser strömt mit einem den spezifischen Widerstand der Membran überwindenden Wasserdruck von der Rohwasserseite durch die Membran hindurch auf deren Permeatseite, wobei die in dem Rohwasser vorhandenen Verunreinigungen auf der Rohwasserseite der Membran zurückbleiben. Diese Verunreinigungen werden in bestimmten Zeitabständen entsprechend dem Grad der Verschmutzung des Rohwassers durch Öffnen des Ventils an dem zweiten Ablauf 13 und Spülen der Membran entfernt.

Von der Permeatseite aus gelangt das gereinigte Wasser (Permeatwasser P) aus dem ersten Ablauf 12 des Membranfilters 1 durch die Stromverzweigung 50 in die Permeatleitung 2 und über diese zu einer Verbrauchsstelle V oder in einen Kreislauf. Dabei verhindert der erste Rückflussverhinderer 21, dass das Permeatwasser insbesondere in den Phasen, in denen es in der Permeatleitung 2 nicht oder nur mit geringer Geschwindigkeit strömt, zurück in Richtung der Stromverzweigung 50 fließen kann.

Ein Teil des Permeatwassers P wird über die Stromverzweigung 50 als Abströmwasser A in die Abströmleitung 3 geführt. Mit dem zweiten Rückflussverhinderer 31 wird verhindert, dass das Abströmwasser A zurück in Richtung der Stromverzweigung 50 fließen kann.

Der wirksame Querschnitt der Abströmleitung 3 wird mindestens so groß gewählt, dass das pro Zeiteinheit durch die Abströmleitung 3 fließende Volumen des Abströmwassers A so hoch ist, dass insbesondere in dem Fall, in dem das Permeatwasser V in der Permeatleitung 2 nahezu oder vollständig zum Stehen kommt, noch eine solche Menge von Rohwasser pro Zeiteinheit durch die Membran des Membranfilters 1 hindurch tritt, dass sich keine wesentlichen Verschmutzungen in Form von Bakterien oder Viren an der Permeatseite der Membran ansammeln können. Der erforderliche Querschnitt der Abströmleitung 3 hängt somit im Wesentlichen von der Art und Größe des Membranfilters 1 und davon ab, wie hoch der geforderte Reinheitsgrad des Permeatwassers P ist. Je größer also der geforderte Reinheitsgrad des Permeatwassers ist, desto größer wird auch der Querschnitt der Abströmleitung 3 gewählt. Abgesehen von dem pro Zeiteinheit zu der Verbrauchsstelle V fließenden Volumenstrom des Permeatwassers P wird das pro Zeiteinheit tatsächlich durch die Abströmleitung 3 fließende Volumen (Volumenstrom) des Abströmwassers A dann im Wesentlichen durch den Druck, mit dem das Rohwasser dem Membranfilter 1 zugeführt wird, sowie durch den Widerstand bestimmt, der durch die Membran des Membranfilters 1 dem Rohwasser entgegengesetzt wird.

Wenn der Volumenstrom- oder Durchflussmengenmesser oder -Sensor 22 eingesetzt ist, dient dieser zur Erfassung des Volumenstroms (oder der Durchflussmenge) pro Zeiteinheit des Permeatwassers P zu der Verbrauchsstelle V. In diesem Fall dient ein den erfassten Volumenstrom (oder die erfasste Durchflussmenge) pro Zeiteinheit darstellendes Ausgangssignal des Sensors 22 dazu, zum Beispiel ein Ventil an dem zweiten Ausgang der Stromverzweigung 50 zu öffnen oder zu schließen, wenn der zu der Verbrauchsstelle V fließende Volumenstrom des Permeatwassers P einen bestimmten Grenzwert unterschreitet bzw. überschreitet, oder in dem Maße zu öffnen oder zu schließen, in dem sich der zu der Verbrauchsstelle V fließende Volumenstrom des Permeatwassers P vermindert bzw. erhöht, um auf diese Weise einen Mindest-Volumenstrom von Rohwasser pro Zeiteinheit durch die Membran des Membranfilters 1 aufrechtzuerhalten, der, wie oben erläutert wurde, durch die Abströmleitung 3 geführt und so bemessen ist, dass eine Reverkeimung der Permeatseite des Membranfilters 1 in einem gewünschten Ausmaß verhindert wird.

Als Volumenstrom- oder Durchflussmengenmesser oder -Sensor 22 kann zum Beispiel ein Vortex-Durchflussmesser oder ein beliebiger anderer Duchflussmesser verwendet werden, der ein zum Ansteuern eines Ventils geeignetes Ausgangssignal erzeugt.

Der Durchflussbegrenzer 32 dient, insbesondere wenn kein Volumenstrom- oder Durchflussmengenmesser oder -Sensor 22 verwendet wird, dazu, die Höhe des Volumenstroms auf den benötigten Maximalwert zu begrenzen, wenn zum Beispiel die Abströmleitung 3 einen größeren Querschnitt aufweist, als er zur Erzielung des für die Verhinderung der Reverkeimung benötigten Volumenstroms erforderlich ist. Dies kann insbesondere dann sinnvoll sein, wenn durch einen zu hohen Volumenstrom in der Abströmleitung 3 und einen relativ geringen Durchsatz von Rohwasser durch den Membranfilter 1 die Versorgung des Verbrauchers V mit Permeatwasser P nicht mehr in ausreichendem Maße sichergestellt werden könnte.

Das Abströmwasser A kann stromabwärts des ersten Durchflussbegrenzers 32 ggf. wieder dem Zulauf 11 des Membranfilters 1 zugeführt werden, so dass keine Verluste auftreten bzw. kein erhöhter Rohwasserbedarf gegeben ist.

Um insbesondere in dem Fall, in dem kein Volumenstrom- oder Durchflussmengenmesser oder -Sensor 22 verwendet wird, den Volumenstrom in der Abströmleitung 3 einstellen und damit an einen konkreten Anwendungsfall bzw. die Betriebsbedingungen anpassen zu können, wird anstelle des (festen) Durchflussbegrenzers 32 gemäß Figur 1 (A) vorzugsweise ein einstellbarer Durchflussbegrenzer 32r gemäß Figur 1(B) gewählt. Figur 1(B) zeigt dabei nur die Abströmleitung 3, die wiederum auch den zweiten Rückflussverhinderer 31 zwischen der Stromverzweigung 50 und dem (einstellbaren) Durchflussbegrenzer 32r aufweist und in gleicher Weise mittels der Stromverzweigung 50 von der Permeatleitung 2 abzweigt, wie es oben im Zusammenhang mit Figur 1 (A) beschrieben wurde.

Feste und variable Durchflussbegrenzer 32, 32r an sich sind bekannt und brauchen deshalb nicht im Detail erläutert zu werden.

Weiterhin kann alternativ oder zusätzlich zu dem Durchflussbegrenzer 31, 31r ein Ventil oder Kugelhahn 33 in die Abströmleitung 3 eingesetzt werden. Ein solches Ventil 33 kann entweder ein reines Absperrventil (zum Beispiel ein bistabiles Mikroventil) sein, mit dem der Volumenstrom durch die Abströmleitung 3 unterbrochen oder freigegeben wird, oder es wird ein Ventil mit regelbarem Durchflussquerschnitt, wie zum Beispiel ein Proportionalventil zur stufenlosen Durchflussregelung, eingesetzt, mit dem die Höhe des Volumenstroms eingestellt werden kann. Dies kann entweder manuell erfolgen, oder in dem Fall, in dem ein Volumenstrom- oder Durchflussmengenmesser oder -Sensor 22 verwendet wird, durch Ansteuerung des Absperr- oder Proportionalventils durch diesen wie es oben beschrieben wurde. Dies gilt auch für die in den Figuren 1 (C) bis 1(E) gezeigten und unten erläuterten Ausführungsformen.

Generell können solche Ventile pneumatisch oder elektrisch-mechanisch betätigte bzw. gesteuerte oder in anderer Weise arbeitende Ventile sein. Der Einsatz eines Ventils hat im Vergleich zu dem oben beschriebenen Durchflussbegrenzer 32, 32r auch den Vorteil, dass es auch vollständig geschlossen werden kann, um im Bedarfsfall den Volumenstrom in der Abströmleitung 3 vollständig zu unterbrechen.

Verschiedene Varianten mit solchen Ventilen sind in den Figuren 1(C) bis 1(E) dargestellt.

Bei der Ausführungsform gemäß Figur 1(C) ist anstelle eines Durchflussbegrenzers ein Ventil 33 eingesetzt. In diesem Fall ist das Ventil vorzugsweise ein regelbares (Proportional-) Ventil, so dass entsprechend einem konkreten Anwendungsfall die Höhe des durch die Abströmleitung 3 fließenden Volumenstroms kontinuierlich einstellbar ist.

Darüber hinaus weist auch bei dieser Ausführungsform die Abströmleitung 3 wiederum den zweiten Rückflussverhinderer 31 auf, der zwischen die Stromverzweigung 50 und das Ventil 33 geschaltet ist.

Ein Absperr- oder Proportional-Ventil 33 kann aber auch mit einem festen oder einstellbarem Durchflussbegrenzer 32, 32r kombiniert werden. Figur 1(D) zeigt eine Ausführungsform, bei der zwischen den Rückflussverhinderer 31 und das Ventil 33 ein fester Durchflussbegrenzer 32 geschaltet ist, wie er oben im Zusammenhang mit Figur 1(A) erläutert wurde.

In Figur 1 (E) ist schließlich eine Ausführungsform gezeigt, bei der zwischen den Rückflussverhinderer 31 und das Ventil 33 ein einstellbarer Durchflussbegrenzer 32r in die Abströmleitung 3 geschaltet ist, wie er oben im Zusammenhang mit Figur 1 (B) erläutert wurde.

Die Ausführungsformen gemäß Figur 1 (D) und (E) sind insbesondere dann sinnvoll, wenn ein Proportional-Ventil 33 verwendet wird, der Volumenstrom durch die Abströmleitung 3 jedoch nicht über einen bestimmten Betrag hinaus vergrößert werden soll. Ein Benutzer kann dann durch Öffnen des Ventils 33 den Volumenstrom nur bis zu einem durch den Durchflussbegrenzer 32; 32r bestimmten, maximalen Wert erhöhen, nicht jedoch darüber hinaus, während er ihn durch Schließen des Ventils 33 weiter vermindern oder ganz unterbinden kann.

Auch bei diesen beiden Ausführungsformen ist wiederum der zweite Rückflussverhinderer 31 vorgesehen, der vorzugsweise zwischen die Stromverzweigung 50 und den Durchflussbegrenzer 32; 32r in die Abströmleitung 3 geschaltet ist.

Somit besteht das grundlegende Prinzip der Erfindung also darin, mittels der Abströmleitung 3 stets einen zur Verhinderung einer Reverkeimung notwendigen Mindest-Volumenstrom pro Zeiteinheit durch einen Membranfilter 1 aufrecht zu erhalten und dadurch zumindest eine wesentliche Ansammlung bzw. Vermehrung von Bakterien oder Viren an der Permeatseite der Membran zu verhindern, und zwar insbesondere dann, wenn zu bestimmten Zeiten von der Verbrauchsstelle V kein oder nur sehr wenig Permeatwasser P benötigt wird. Ohne Anwendung des Volumenstrom- oder Durchflussmengenmessers oder -Sensors 22 wird dabei durch den Druck des über den Zulauf 11 des Membranfilters 1 zugeführten Rohwassers R in dem Maße, wie sich der Abfluss von Permeatwasser 2 zu der Verbrauchsstelle V vermindert bzw. erhöht, der Volumenstrom pro Zeiteinheit durch die Abströmleitung 3 erhöht bzw. vermindert, so dass bei geeigneter Bemessung bzw. Einstellung des wirksamen Querschnitts der Abströmleitung 3 stets der genannte Mindest-Volumenstrom durch den Membranfilter 1 gewährleistet ist.

Der erste Rückflussverhinderer 21 verhindert dabei, dass insbesondere dann, wenn der Volumenstrom des Permeatwassers P in der Permeatleitung 2 gering oder null ist, dieses zurück in die Stromverzweigung 50 und in die Abströmleitung 3 gelangen kann. Der zweite Rückflussverhinderer 31 verhindert ein Rückfließen des Abströmwassers 3 in die Permeatleitung 2, wenn der Volumenstrom des Permeatwasser P durch die Permeatleitung 2 relativ hoch und der Volumenstrom durch die Abströmleitung 3 entsprechend gering ist oder vollständig zum Erliegen kommt.

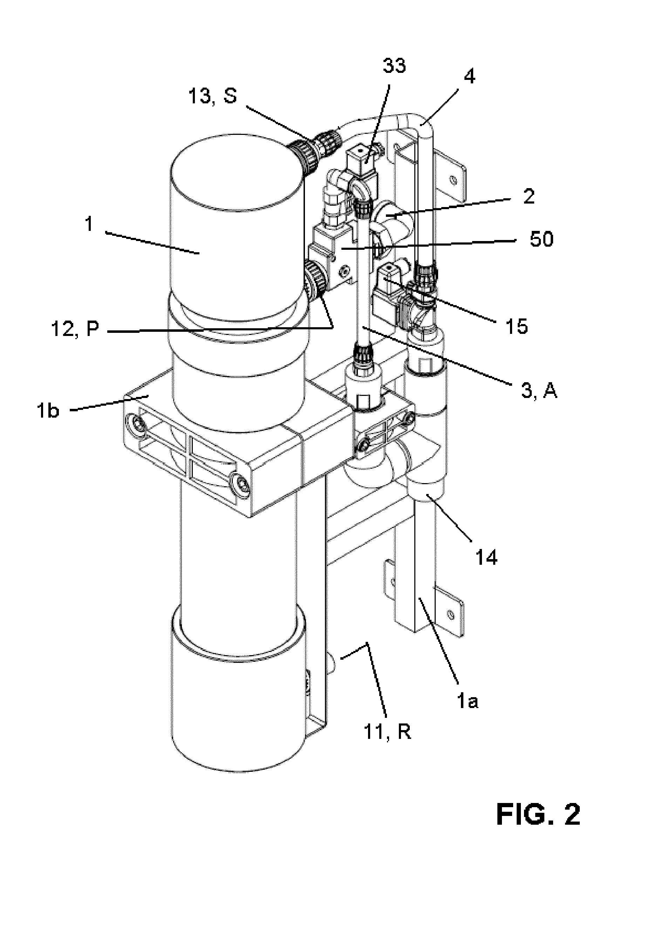

Figur 2 zeigt in dreidimensionaler Ansicht beispielhaft eine Filtrations- oder Ultrafiltrationsanlage gemäß der Erfindung. Die wesentlichen, in dieser Darstellung erkennbaren Komponenten sind der Membranfilter 1, der einen Zulauf 11 für Rohwasser R, einen ersten Ablauf 12 für Permeatwasser P sowie einen zweiten Ablauf 13 für Spülwasser S aufweist.

In Figur 2 ist schematisch auch eine erfindungsgemäße Stromverzweigung 50 zu erkennen, die einen Eingang sowie einen ersten und einen zweiten Ausgang aufweist. Der Eingang der Stromverzweigung 50 ist wiederum an den ersten Ablauf 12 des Membranfilters 1 angeschlossen, während der erste Ausgang mit einer Permeatleitung 2 und der zweite Ausgang mit einer Abströmleitung 3 verbunden ist. Wie oben bereits erläutert wurde, wird über die Permeatleitung 2 das gereinigte Permeatwasser einer Verbrauchsstelle V bzw. einem Kreislauf zur Nutzung zugefügt. Die Abströmleitung 3 führt gemäß Figur 2 in einen Ablauf 14 der Filtrationsanlage, über den auch das Spülwasser S abgeführt wird. Alternativ dazu könnte die Abströmleitung 3 auch mit dem Zulauf 11 des Membranfilters 1 verbunden sein, um das Abströmwasser A zusammen mit dem Rohwasser R dem Membranfilter 1 zuzuführen.

Die Stromverzweigung 50 beinhaltet ein T-Leitungsstück, mit dem das über den Eingang zugeführte Permeatwasser auf den ersten und den zweiten Ausgang verteilt wird. Die Stromverzweigung 50 beinhaltet in einem Gehäuse neben diesem T-Leitungsstück vorzugsweise auch den oben erläuterten ersten Rückflussverhinderer 21 an dem ersten Ausgang und/oder den oben erläuterten zweiten Rückflussverhinderer 31 an dem zweiten Ausgang. Optional kann das Gehäuse ferner zwischen dem zweiten Rückflussverhinderer 31 und dem zweiten Ausgang weiterhin den festen oder einstellbaren Durchflussbegrenzer 32; 32r und/oder das Ventil 33 gemäß obigen Erläuterungen beinhalten, wobei dieses/diese optionale(n) Element(e) auch separat ausgeführt sein können. In allen diesen Fällen bildet die Stromverzweigung 50 zusammen mit den genannten Komponenten vorzugsweise eine konstruktive Einheit ("Stromverzweigungseinheit").

Bei der in Figur 2 gezeigten Ausführungsform ist das optionale, oben erläuterte Ventil 33 separat ausgeführt, jedoch mechanisch mit dem Gehäuse der Stromverzweigung 50 verbunden.

Figur 2 zeigt auch eine Spülwasserleitung 4, die mit dem zweiten Ablauf 13 des Membranfilters 1 verbunden ist und über ein optionales Spülwasser-Ventil 15 in den Ablauf 14 der Filtrationsanlage führt.

Die Filtrationsanlage wird schließlich vorzugsweise als kompakte Baueinheit ausgeführt und kann z.B. mittels eines Rahmens 1a und einer Schelle 1b an einer Wand befestigt werden.

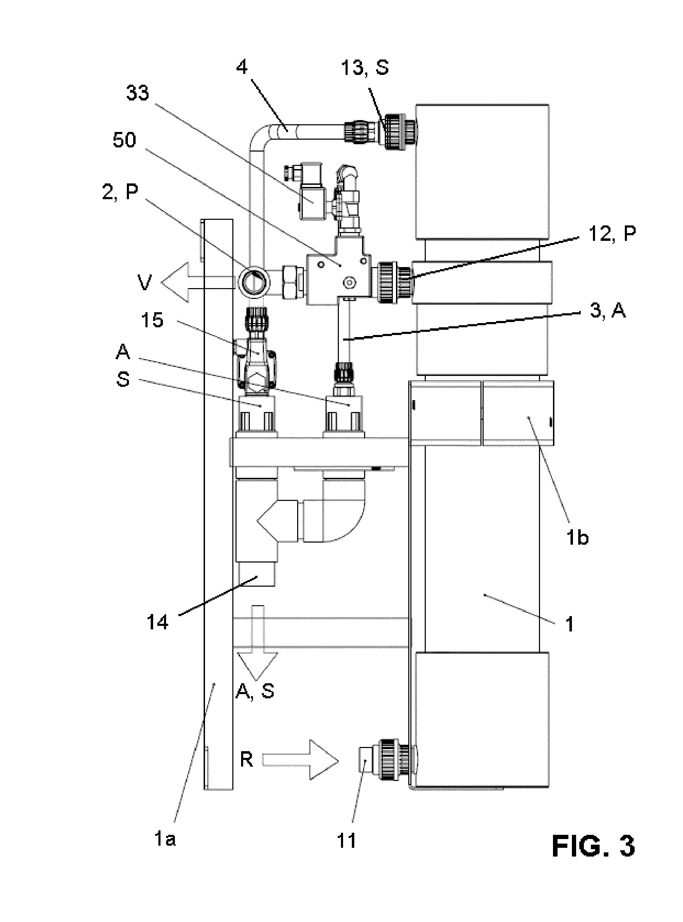

Figur 3 zeigt eine Seitenansicht der in der Figur 2 dargestellten Filtrationsanlage. Gleiche Elemente und Komponenten wie in Figur 2 sind in Figur 3 wiederum mit jeweils gleichen Bezugsziffern bezeichnet.

Auch in dieser Darstellung ist der Membranfilter 1 mit dem Zulauf 11 für Rohwasser R, dem ersten Ablauf 12 für Permeatwasser P sowie dem zweiten Ablauf 13 für Spülwasser S zu erkennen. Weiterhin zeigt diese Figur die Stromverzweigung 50, die mit ihrem Eingang mit dem ersten Ablauf 12 des Membranfilters 1 verbunden ist. Der erste Ausgang der Stromverzweigung 50 wird über die Permeatleitung 2 mit einer Verbrauchsstelle V bzw. einem Kreislauf (nicht dargestellt) verbunden. Der zweite Ausgang der Stromverzweigung 50 ist über das Ventil 33 an die Abströmleitung 3 für das Abströmwasser A angeschlossen. Schließlich zeigt auch diese Figur die an den zweiten Ablauf 13 des Membranfilters 1 angeschlossene Spülwasserleitung 4, die über das Spülwasserventil 15, zusammen mit der Abströmleitung 3, in den Ablauf 14 der Filtrationsanlage mündet, um Spülwasser S und Abströmwasser A abzuführen.

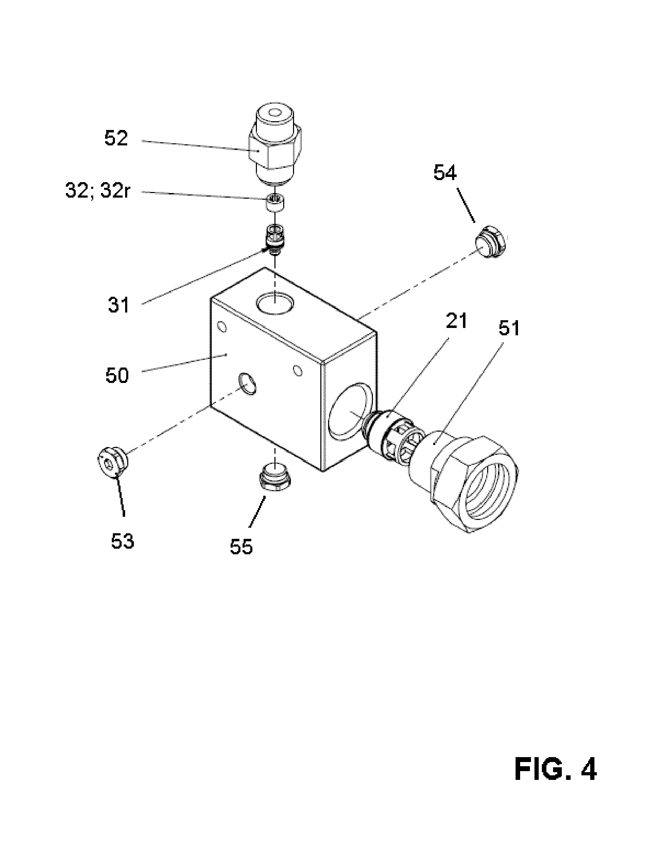

Figur 4 zeigt eine Explosionsdarstellung eines Gehäuses, in dem sich eine Stromverzweigung 50 befindet. Ferner sind in dieses Gehäuse beispielhaft der erste Rückflussverhinderer 21 an dem ersten Ausgang und der zweite Rückflussverhinderer 31 an dem zweiten Ausgang der Stromverzweigung integriert. Weiterhin ist ein fester oder einstellbarer Durchflussbegrenzer 32; 32r gezeigt, der ebenfalls in das Gehäuse der Stromverzweigung integriert ist, Um eine kompakte Stromverzweigungseinheit zu bilden. Alternativ dazu kann dieser Durchflussbegrenzer 32; 32r jedoch auch entfallen und ggf. als separate Einheit (s. u.) angeordnet werden.

Die weiteren, in Figur 4 gezeigten Komponenten sind optional und werden entsprechend der vorgesehenen Einbausituation und Anwendung gewählt. Beispielhaft ist an dem ersten Ausgang eine Verschraubung 51 gezeigt, an die eine Permeatleitung 2 zu einer Verbrauchsstelle oder einem Kreislauf angeschlossen werden kann. An dem zweiten Ausgang befindet sich ein Doppelnippel 52, an den die Abströmleitung 3 angeschlossen wird. Das Gehäuse ist schließlich vorzugsweise mit Bohrungen versehen, die im Bedarfsfall zum Beispiel zur Probenentnahme oder zur Einführung von Sonden dienen und mit Stopfen 53, 54, 55 verschlossen werden können.

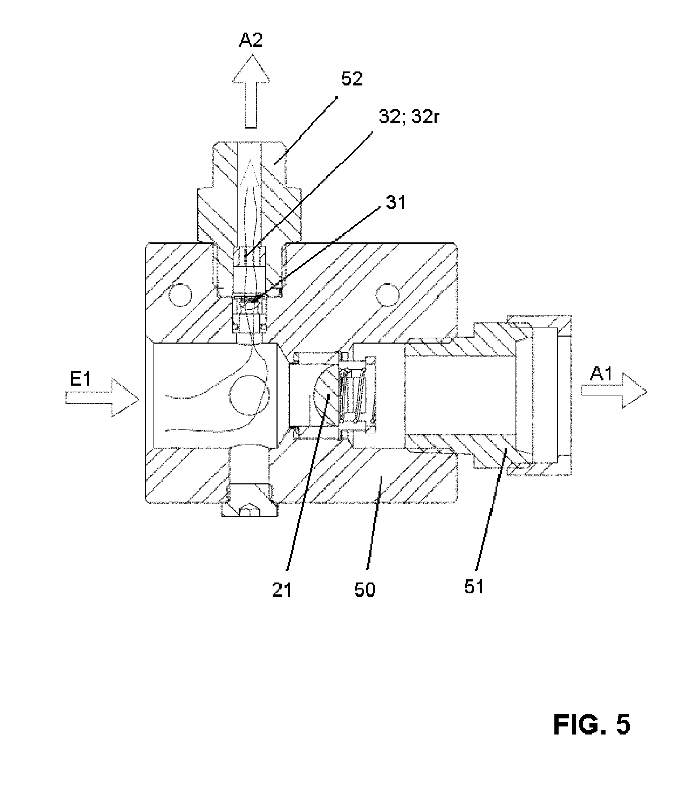

Figur 5 zeigt einen Längsschnitt durch eine erste Ausführungsform einer erfindungsgemäßen Stromverzweigungseinheit in zusammengebautem Zustand. Gleiche Teile und Komponenten wie in Figur 4 sind Figur 5 mit jeweils gleichen Bezugsziffern bezeichnet.

Wesentliche Komponenten sind die in einem Gehäuse befindliche Stromverzweigung 50, der Eingang E1, der mit dem ersten Ablauf 12 des Membranfilters 1 zu verbinden ist, der erste Ausgang A1, der mit der Permeatleitung 2 zu einer Verbrauchsstelle bzw. einem Kreislauf zu verbinden ist, sowie der zweite Ausgang A2, der mit der Abströmleitung 3 zu verbinden ist.

Weiterhin sind gemäß der in Figur 5 gezeigten ersten Ausführungsform der erste und der zweite Rückflussverhinderer 21, 31 sowie der feste oder variabler Durchflussbegrenzer 32; 32r in das Gehäuse der Stromverzweigung 50 integriert. Wie bereits erläutert wurde, befindet sich dabei der erste Rückflussverhinderer 21 zwischen der Stromverzweigung und dem ersten Ausgang A1 der Stromverzweigungseinheit, während der zweite Rückflussverhinderer 31 zwischen die Stromverzweigung und den zweiten Ausgang A2 der Stromverzweigungseinheit eingesetzt ist. Weiterhin ist bei dieser Ausführungsform der feste oder variable Durchflussbegrenzer 32; 32r zwischen den zweiten Rückflussverhinderer 31 und den zweiten Ausgang A2 geschaltet.

In der Darstellung der Figur 5 ist der erste Rückflussverhinderer 21 geschlossen und der zweite Rückflussverhinderer 31 geöffnet. Dadurch ergibt sich der angedeutete Strömungsverlauf von dem Eingang E1 zu dem zweiten Ausgang A2 der Stromverzweigungseinheit in die Abströmleitung 3.

Wie oben bereits erläutert wurde, tritt dieser Zustand dann ein, wenn der Volumenstrom durch die Permeatleitung 2 nahezu oder vollständig zum Erliegen kommt, so dass der erste Rückflussverhinderer 21 durch Federkraft schließt. Wenn im umgekehrten Fall der Volumenstrom durch die Permeatleitung 2 sehr hoch ist, ist der erste Rückflussverhinderer 21 geöffnet, und der zweite Rückflussverhinderer 31 schließt durch Federkraft aufgrund des verminderten oder vollständig zum Erliegen gekommenen Volumenstroms durch die Abströmleitung 3.

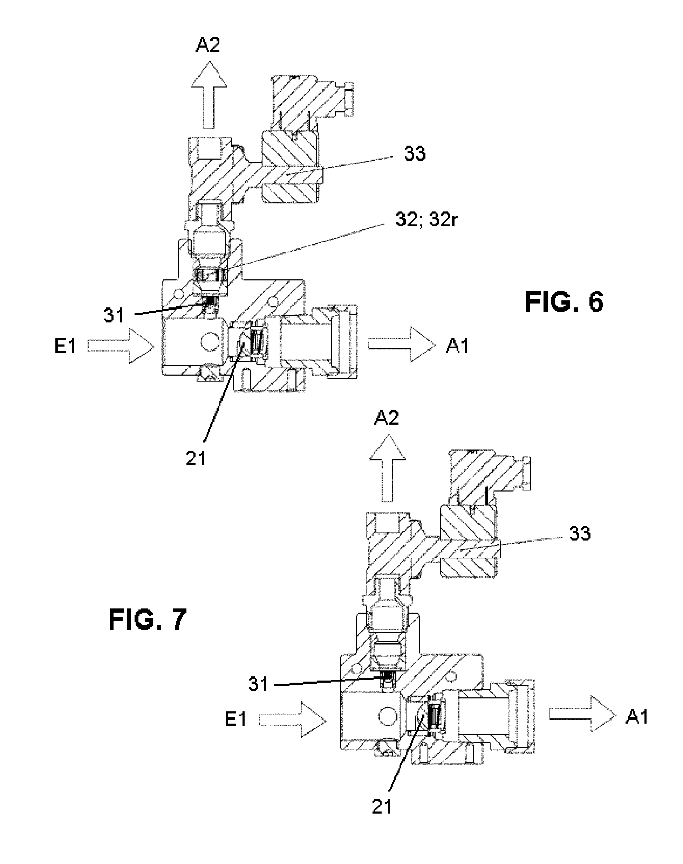

Die übrigen Komponenten, wie zum Beispiel die Verschraubung 51 und der Doppelnippel 52 sind wiederum optional und wurden mit Bezug auf Figur 4 bereits erläutert. In den Figuren 6 bis 9 sind diese Komponenten nicht mehr gesondert bezeichnet. Figur 6 zeigt einen Längsschnitt durch eine zweite Ausführungsform einer erfindungsgemäßen Stromverzweigungseinheit. In dieser Darstellung sind wiederum der Eingang E1 zur Verbindung mit dem ersten Ablauf 12 eines Membranfilters 1, der erste Ausgang A1 zur Verbindung mit der Permeatleitung 2 zu einer Verbrauchsstelle bzw. einem Kreislauf, sowie der zweite Ausgang A2 zur Verbindung mit der Abströmleitung 3 dargestellt. Weiterhin sind der erste und der zweite Rückflussverhinderer 21, 31 zu erkennen, die zusammen mit einem fester oder variabler Durchflussbegrenzer 32; 32r in das Gehäuse der Stromverzweigung 50 integriert sind. Ferner weist diese Ausführungsform ein Ventil 33, vorzugsweise in Form eines Magnetventils auf, das als separate Einheit zwischen den festen oder variablen Durchflussbegrenzer 32; 32r und den zweiten Ausgang A2 der Stromverzweigungseinheit geschaltet ist, und mit dem das pro Zeiteinheit durch die Abströmleitung 3 geführte Volumen des Abströmwassers durch einen Benutzer verändert werden kann.

Figur 7 zeigt einen Längsschnitt durch eine dritte Ausführungsform einer erfindungsgemäßen Stromverzweigungseinheit, wobei wiederum der Eingang E1 zur Verbindung mit dem ersten Ablauf 12 des Membranfilters 1, der erste Ausgang A1 zur Verbindung mit der Permeatleitung 2, sowie der zweite Ausgang A2 zur Verbindung mit der Abströmleitung 3 dargestellt ist. Auch bei dieser Ausführungsform ist ein erster und ein zweiter Rückflussverhinderer 21, 31 in das Gehäuse der Stromverzweigung 50 integriert und ein Ventil 33, vorzugsweise in Form eines Magnetventils, als separate Einheit vorgesehen. Im Unterschied zu der oben erläuterten zweiten Ausführungsform beinhaltet diese Stromverzweigungseinheit jedoch keinen Durchflussbegrenzer, so dass das Ventil 33 zwischen den zweiten Rückflussverhinderer 31 und den zweiten Ausgang A2 der Stromverzweigungseinheit geschaltet ist. Bei dieser Ausführungsform kann ein Benutzer das Volumen des über die Abströmleitung 3 geführten Abströmwassers in einem größeren Bereich einstellen, da es nicht durch einen Durchflussbegrenzer begrenzt wird.

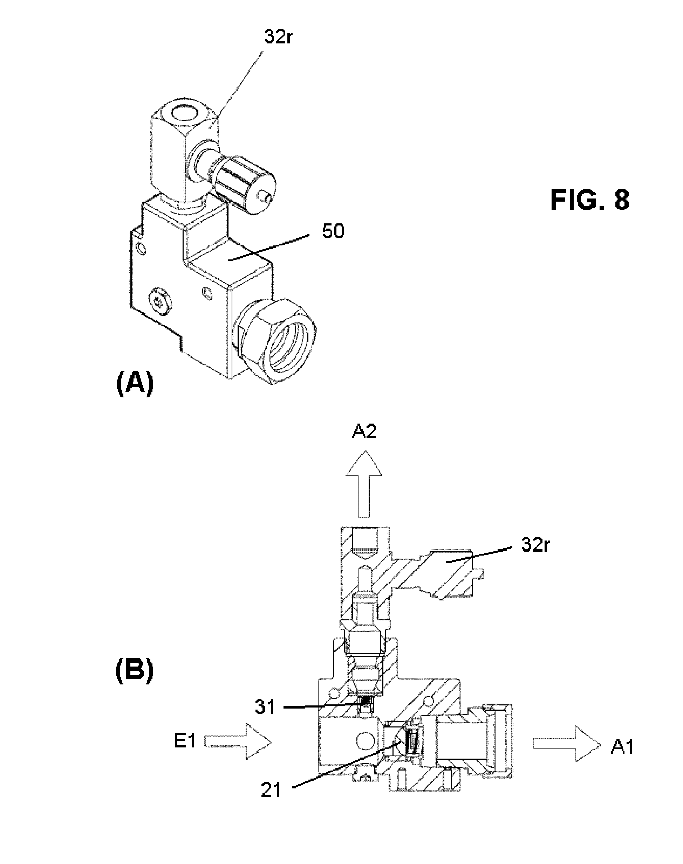

Figur 8 zeigt eine vierte Ausführungsform einer erfindungsgemäßen Stromverzweigungseinheit. In der dreidimensionalen Ansicht gemäß Figur 8(A) ist das Gehäuse der Stromverzweigung 50 sowie ein variabler Durchflussbegrenzer 32r zu erkennen, der nicht in das Gehäuse integriert, sondern als separate Einheit an diesem Gehäuse befestigt ist, nämlich, wie in Figur 8(B) gezeigt ist, zwischen dem zweiten Rückflussverhinderer 31 und dem zweiten Ausgang A2 der Stromverzweigungseinheit. Die Darstellung des Längsschnitts durch diese Ausführungsform gemäß Figur 8(B) zeigt, dass der erste und der zweite Rückflussverhinderer 21, 31 wiederum in das Gehäuse integriert ist.

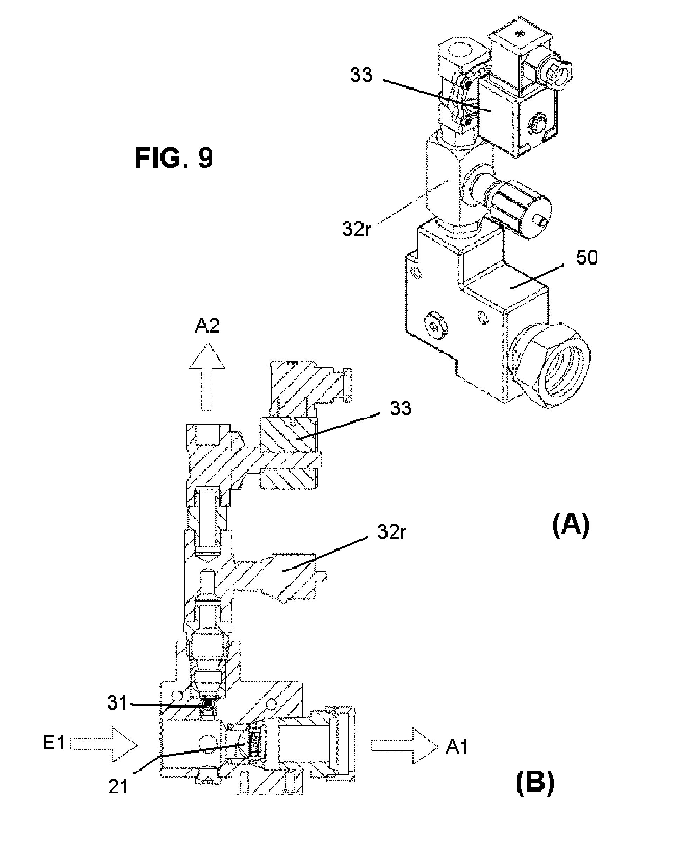

Figur 9 zeigt eine fünfte Ausführungsform einer erfindungsgemäßen Stromverzweigungseinheit, die ein Gehäuse für die Stromverzweigung 50 sowie einen variablen Durchflussbegrenzer 32r als separate Einheit und ein Ventil 33 als separate Einheit umfasst. Wie in der Darstellung des Längsschnitts durch diese Ausführungsform gemäß Figur 9(B) zu erkennen ist, befindet sich auch hierbei der erste und der zweite Rückflussverhinderer 21, 31 wiederum innerhalb des Gehäuses der Stromverzweigung 50, während der variable Durchflussbegrenzer 32r zwischen den zweiten Rückflussverhinderer 31 und das Ventil 33, und das Ventil 33 zwischen den variablen Durchflussbegrenzer 32r und den zweiten Ausgang A2 geschaltet ist.

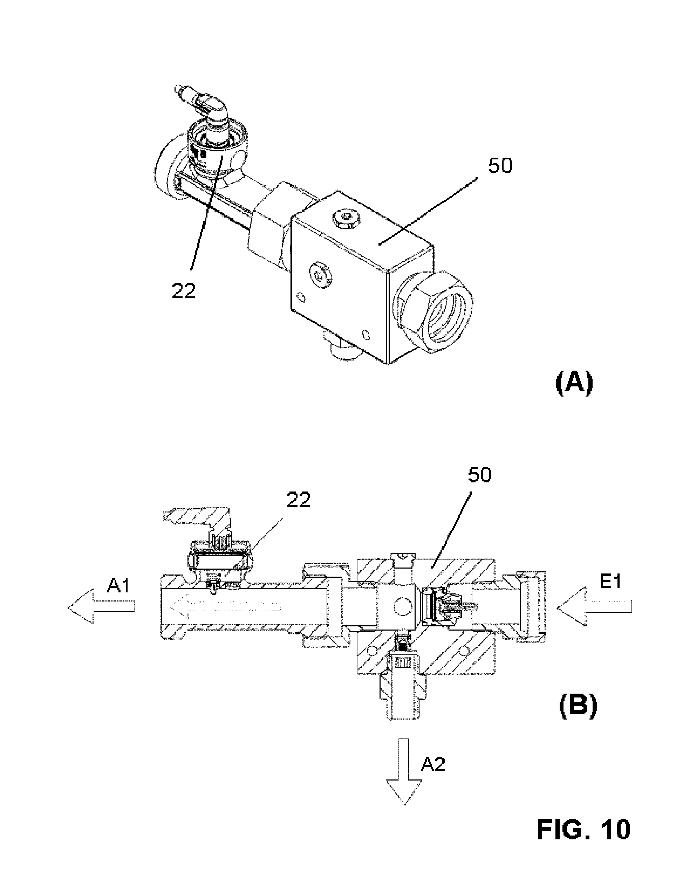

Figur 10 zeigt schließlich in dreidimensionaler Ansicht (A) sowie im Längsschnitt (B) ein Gehäuse der Stromverzweigung 50 in Kombination mit einem Volumenstrom- oder Durchflussmengenmesser oder -Sensor 22, der zwischen den ersten Ausgang A1 und eine Permeatleitung P geschaltet ist, um den Volumenstrom oder die Durchflussmenge pro Zeiteinheit des dem Verbraucher zugeführten Permeatwassers zu messen. Wie schon oben erläutert wurde, wird mit dem Ausgangssignal des Volumenstrom- oder Durchflussmengenmessers oder -Sensors 22 ein Ventil 33 in der Abströmleitung oder an den zweiten Ausgang A2 der Stromverzweigung 50 angesteuert, d.h. geöffnet oder geschlossen, wenn der Permeatwasser-Strom einen bestimmten Grenzwert unterschreitet bzw. überschreitet, oder in dem Maße geöffnet bzw. geschlossen, wie der Permeatwasser-Strom absinkt bzw. ansteigt.

Abgesehen von den oben beschriebenen Besonderheiten entspricht der detaillierte Aufbau der in den Figuren 6 bis 10 gezeigten Ausführungsformen beispielhaft dem Aufbau der ersten, in Figur 5 dargestellten Ausführungsform, so dass hinsichtlich dieser Details auf die Beschreibung der ersten Ausführungsform Bezug genommen wird und nicht im Einzelnen wiederholt werden soll.

## Patentansprüche

1. Verfahren zum Schutz der Permeatseite eines Membranfilters gegen eine Reverkeimung insbesondere in einem Trinkwasser-, Prozesswasser- oder Kühlwasser-System oder in einem anderen System mit einem anderen wässrigen Medium, mit einer Permeatleitung zur Zuführung von durch den Membranfilter hindurch getretenen Permeatwasser zu dem System, **dadurch gekennzeichnet, dass** ein Teil des Permeatwassers abgezweigt wird, dessen Volumen pro Zeiteinheit mindestens so groß eingestellt wird, dass das Volumen des pro Zeiteinheit durch den Membranfilter hindurch tretenden Wassers ein vorgegebenes Mindestvolumen pro Zeiteinheit auch dann nicht unterschreitet, wenn die Zufuhr von Permeatwasser zu dem System vermindert oder unterbrochen ist, wobei das Mindestvolumen so groß gewählt ist, dass eine Reverkeimung der Permeatseite des Membranfilters in einem gewünschten Ausmaß verhindert wird.

2. Verfahren nach Anspruch 1,
bei dem das Volumen des dem System pro Zeiteinheit zugeführten Permeatwassers gemessen wird und das Volumen des pro Zeiteinheit abgezweigten Teils des Permeatwassers in Abhängigkeit von dem gemessenen Volumen so geregelt wird, dass das Mindestvolumen des pro Zeiteinheit durch den Membranfilter hindurch tretenden Wassers nicht unterschritten wird.

3. Verfahren nach Anspruch 1,
bei dem der abgezweigte Teil des Permeatwasser einem Rohwasser-Zulauf des Membranfilters wieder zugeführt wird.

4. Vorrichtung zum Schutz der Permeatseite eines Membranfilters gegen eine Reverkeimung insbesondere in einem Trinkwasser-, Prozesswasser- oder Kühlwasser-System oder in einem anderen System mit einem anderen wässrigen Medium, **gekennzeichnet durch** eine Stromverzweigung (50) mit einem Eingang (E1) zur Flüssigkeitsverbindung mit einem ersten Ablauf (12) des Membranfilters (1) für gereinigtes Permeatwasser, einem ersten Ausgang (A1) zum Anschluss einer Permeatleitung (2) zur Versorgung des Systems mit Permeatwasser, sowie einem zweiten Ausgang (A2) zum Anschluss einer Abströmleitung (3) für einen Teil des Permeatwassers, wobei der wirksame Querschnitt der Abströmleitung (3) so bemessen oder mittels eines Ventils (33) eingestellt ist, dass das pro Zeiteinheit **durch** die Abströmleitung hindurch tretende Abströmvolumen des Permeatwassers mindestens so groß ist, dass das Volumen des pro Zeiteinheit **durch** den Membranfilter (1) hindurch tretenden Wassers ein vorgegebenes Mindestvolumen pro Zeiteinheit nicht unterschreitet, das so bemessen ist, dass eine Reverkeimung der Permeatseite des Membranfilters in einem gewünschten Ausmaß verhindert wird.

5. Vorrichtung nach Anspruch 4,
bei der die Abströmleitung (3) mit einem Rohwasser-Zulauf (11) des Membranfilters (1) verbunden ist.

6. Vorrichtung nach Anspruch 4,
bei der ein Durchflussbegrenzer (32; 32r) in die Abströmleitung (3) geschaltet oder in die Stromverzweigung (50) vor deren zweiten Ausgang integriert ist.

7. Vorrichtung nach Anspruch 6,
bei der der Durchflussbegrenzer (32r) hinsichtlich seiner den Durchfluss des Permeatwassers begrenzenden Eigenschaft einstellbar ist.

8. Vorrichtung nach Anspruch 4,
bei der ein Ventil (33) in die Abströmleitung (3) geschaltet ist.

9. Vorrichtung nach Anspruch 8,
bei der das Ventil (33) ein Absperrventil oder ein Ventil mit regelbarem Durchflussquerschnitt oder ein Proportionalventil zur stufenlosen Durchflussregelung ist.

10. Vorrichtung nach Anspruch 4,
bei der ein erster Rückflussverhinderer (21) in die Permeatleitung (2) geschaltet oder in die Stromverzweigung (50) vor deren ersten Ausgang integriert ist.

11. Vorrichtung nach Anspruch 4,
bei der ein zweiter Rückflussverhinderer (31) in die Abströmleitung (3) geschaltet oder in die Stromverzweigung (50) vor deren zweiten Ausgang integriert ist.

12. Vorrichtung nach Anspruch 8,
mit einem Volumenstrom- oder Durchflussmengenmesser oder -Sensor (22), der zwischen den ersten Ausgang (A1) und die Permeatleitung (2) oder in die Permeatleitung (2) geschaltet ist, um den Volumenstrom oder die Durchflussmenge pro Zeiteinheit des dem Verbraucher zugeführten Permeatwassers zu messen und in Abhängigkeit davon das Ventil (33) zur Einstellung des pro Zeiteinheit durch die Abströmleitung (3) hindurch tretende Abströmvolumen des Permeatwassers anzusteuern.

13. Filtrations- oder Ultrafiltrationsanlage mit einer Vorrichtung gemäß einem der Ansprüche 4 bis 12.
